**Europäisches Patentamt**

**European Patent Office**

**Office européen des brevets**

(19)

(11) Veröffentlichungsnummer: **0 195 938**
**B1**

(12) # EUROPÄISCHE PATENTSCHRIFT

(45) Veröffentlichungstag der Patentschrift:
02.06.89

(51) Int. Cl.⁴: **G 01 L 5/04**

(21) Anmeldenummer: **86102312.5**

(22) Anmeldetag: **22.02.86**

(54) **Fadenzugkraftmessvorrichtung mit federnd bewegbarem Fadenführer.**

(30) Priorität: 27.02.85 DE 3506897
21.06.85 DE 3522239

(43) Veröffentlichungstag der Anmeldung:
01.10.86 Patentblatt 86/40

(45) Bekanntmachung des Hinweises auf die Patenterteilung:
02.06.89 Patentblatt 89/31

(84) Benannte Vertragsstaaten:
**CH DE FR GB IT LI**

(56) Entgegenhaltungen:
**GB-A-2 025 055**
**US-A-3 498 553**
**US-A-4 091 885**

**R. Moskowitz "Ferrofluids: Liquid magnetics",**
**IEEE spectrum, New York (US), März 1975, pp. 53-57**

(73) Patentinhaber: **B a r m a g AG, Leverkuser Strasse 65 Postfach 110 240, D-5630 Remscheid 11 (DE)**

(72) Erfinder: **Wessolowski, Bernd, Walterstrasse 22, D-5630 Remscheid 11 (DE)**
Erfinder: **Mink, Wilfried, Heusiepen 3, D-5600 Wuppertal- Ronsdorf (DE)**

(74) Vertreter: **Pfingsten, Dieter, Dipl.- Ing., Barmag AG Leverkuser Strasse 65 Postfach 110240, D-5630 Remscheid 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Fadenzugkraftmeßvorrichtung mit einem federnd bewegbaren Fadenfühler (Figur 2 in US-A-3 498 553).

Bei der Herstellung und Bearbeitung, insbesondere Texturierung und Falschzwirntexturierung von Fäden ist die Fadenzugkraft ein wesentlicher Prozeßparameter. Auch kurzzeitige Schwankungen können einen wesentlichen Einfluß auf die Qualität des Fadens haben. Daher muß ein brauchbarer Fadenzugkraftmesser nach dem Oberbegriff eine genügend hohe Eigenfrequenz haben, die ihn in die Lage versetzt, der Frequenz der Fadenzugkraftschwankungen zu folgen. Dem steht entgegen, daß damit die Maschinenfrequenzen zur Schwingungserregung des Zugkraftmessers führen können.

Danach liegt der Erfindung die technische Aufgabe zugrunde, eine Zugkraftmeßvorrichtung bereitzustellen, die bei einfachem und gegen Störungen relativ unempfindlichem Aufbau den Fadenzugkraftschwankungen trägheitsarm folgt. Sie wird durch eine Fadenzugkraftmeßvorrichtung eingangs beschriebener Art gelöst, die sich dadurch auszeichnet, daß (zur Gewährleistung einer lageunabhängigen Dämpfung der Fadenfühlerbewegungen) der Fadenfühler ein federnd eingespannter Stab ist, der im Bereich seines freien Endes einen nicht ferromagnetischen Dämpfungsansatz besitzt, der in einen an der Vorrichtung befestigten Topf eintaucht, an dessen Grund (oder unter dessen Boden) sich ein Magnet befindet und der eine magnetische Dämpfungsflüssigkeit enthält.

Vorteilhafte Ausführungsformen sind den abhängigen Ansprüchen zu entnehmen,

Gemäß Anspruch 3 wird erreicht, daß das freie Ende des Fadenfühlers lediglich eine Parallelverschiebung ausführt und sich daher die Kraftrichtung der Reaktionskraft, die auf den Faden einwirkt, nicht ändert.

Der federnde Ausschlag des Fadenfühlers wird durch geeignete Meßelemente, z. B. Dehnmeßstreifen ermittelt. Ein weitgehend temperaturunabhängiges Meßsystem besteht aus einer Wegmeßeinrichtung, durch die die Weglänge des Ausschlages des Fadenfühlers unmittelbar gemessen wird.

Hierbei kann es sich z. B. um eine Paarung aus Sender und Empfänger handeln, wobei die Empfangsquantität das Meßsignal darstellt, das sich mit der Größe des Ausschlages verändert. Es kann sich z. B. um einen optischen Sender und eine lichtempfindliche Zelle, z. B. Fotodiode handeln.

Unter "Knochenform" werden im Anspruch 4 Öffnungen in den Seitenwänden verstanden, die zueinander parallele Begrenzungen haben und an beiden Enden in kreisförmigen Erweiterungen auslaufen. Zusammen mit dem Einspannende des Gehäuses ist ein starrer Meßstab eingespannt, der in das Gehäuse im wesentlichen bis in den Bereich dessen freien Endes hineinragt. Das freie Ende des den Fadenfühler bildenden Gehäuses weist als im wesentlichen in der Gehäuseachse verlaufende Verlängerung einen Fadenführer und im Inneren in enger Nachbarschaft zu dem freien Ende des starren Meßstabes einen Meßkopf auf. Der Meßstab ist zur Temperaturkompensation aus dem gleichen Material wie das quaderförmige Gehäuse gefertigt. In einer Weiterbildungsform weisen auch Ober- und Unterseite des Gehäuses Ausnehmungen oder Aussparungen auf, um die Federkennlinie und damit den Meßausschlag des Gehäuses den zu erwartenden Fadenzugkräften anzupassen.

Erfindungsgemäß entsteht eine Fadenzugkraftmeßvorrichtung, mit der auch hochfrequente Fadenzugkraftschwankungen von z. B. 30 bis 40 Hz meßbar sind. Die Erweiterung des Meßbereiches ist noch dadurch möglich, daß ein Meßverstärker verwandt wird, dessen Kennlinie im Bereich der Eigenfrequenz des federnd bewegbaren Fadenfühlers ansteigt und hierdurch die frequenzabhängige Kennlinie des Fadenfühlers ganz oder zum Teil kompensiert.

Anhand der beigegebenen Zeichnung wird die Erfindung näher erläutert.

Es zeigen

Fig. 1 eine Ausführungsform mit einfacher Parallelfeder als Fadenfühler;

Fig. 2 eine Ausführungsform mit quaderförmigem Gehäuse als Parallelfeder;

Fig. 3 einen Querschnitt entlang III - III in der Fig. 2.

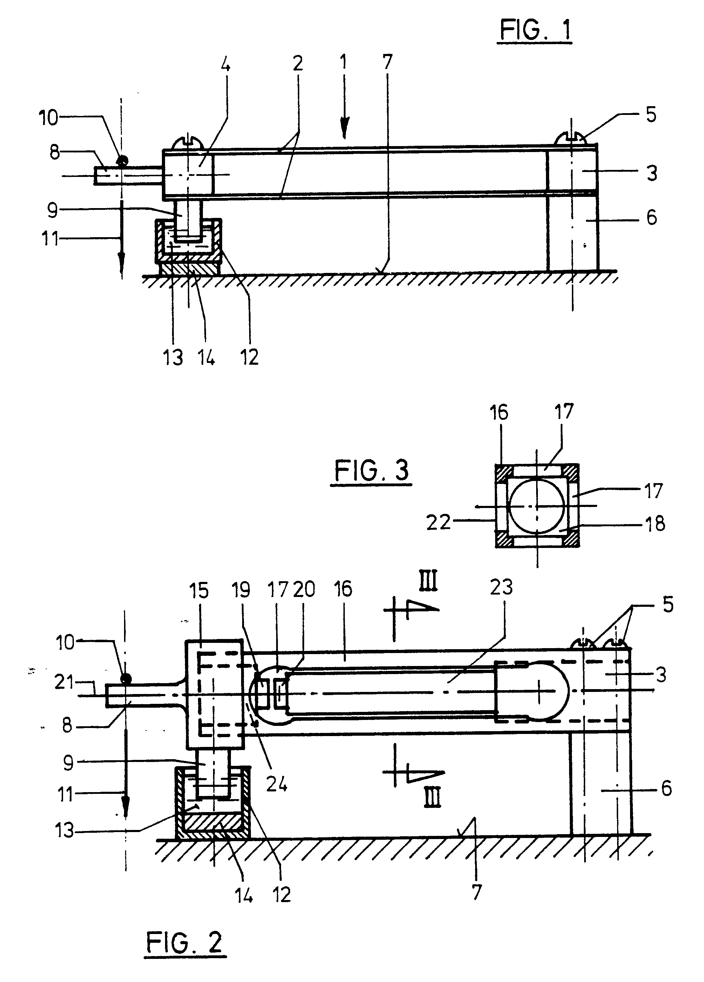

Der Fadenfühler 1 der Fig. 1 besteht aus zwei gleichen schmalen Blattfedern 2, die mittels des Zwischenstücks 4 am freien Ende und des Befestigungsstücks 3 am Einspannende zur Parallelfeder 2 - 4 zusammengesetzt sind. Unter Zwischensetzen eines Distanzstücks 6 ist das Befestigungsende 3 der Parallelfeder 2 - 4 mit der Halterung 7, die auch der Maschinenrahmen sein kann, mit Hilfe einer Schraubverbindung 5 fest verbunden. Das freie Ende (Zwischenstück 4) weist einen Fadenführer 8 und einen sich in Kraftrichtung 11, d.h. der Wirkrichtung der Fadenzugkraft auf den Fadenführer 8, erstreckenden Ansatz oder Dämpfungskolben 9 auf. Dieser taucht in einen mit einer magnetischen Flüssigkeit 13 gefüllten, vorhergehend als Vertiefung 12 bezeichneten Topf 12 ein, der in der dargestellten Ausführungsform auf einem Magneten 14, vorzugsweise ein Permanentmagnet, sitzt und mit diesem zusammen in der Halterung 7 befestigt ist. Der am Fadenführer 8 angreifende Faden 10 kann beispielsweise auch in einer Fadenführungsbohrung im Fadenführer 8 geführt sein.

Magnetische Flüssigkeiten werden in der Literatur auch als "Ferrofluide" bezeichnet. Hierbei handelt es sich um eine Dispersion von extrem winzigen magnetischen Materialteilchen, beispielsweise $Fe_3O_4$. Diese Teilchen sind in Flüssigkeiten wie Kerosin oder Silikonölen fein verteilt. Magnetische Flüssigkeiten werden beispielsweise von Ferrofluidics GmbH, Nürtingen, BR-Deutschland, hergestellt.

Eine andere vorteilhafte Ausführungsform der Erfindung zeigen die Figuren 2 und 3, wobei Fig. 3 ein Schnitt entlang III - III in Fig. 2 ist. Wegen der vergleichsweise großen Empfindlichkeit des Meßorganes kann die Federkonstante relativ groß sein. Dadurch bedingt ist die Eigenfrequenz relativ hoch. Folglich sind auch hochfrequente Fadenzugkraftschwankungen noch erfaßbar. Insbesondere durch die Anordnung der erfindungsgemäßen Einrichtung zur Schwingungsdämpfung 9, 12 - 14 können noch Fadenzugkraftschwankungen mit Frequenzen im Bereich von ca. 50 Hz registriert werden, wenn eine entsprechend trägheitslose Einrichtung wie beispielsweise eine elektro-optische Abtastung Verwendung findet. Durch Kompensation des Frequenzgangs des Meßfühlers mittels eines Verstärkers mit einer Frequenzgangkompensation lassen sich Zugkraftfrequenzen von mehreren 100 Hertz erfassen.

Die dargestellte Ausführungsform besteht aus einem quaderförmigen, auf einem Rohr mit quadratischem Querschnitt gefertigten Gehäue 16, dessen Querschnitt entlang III - III in Fig. 2 in der Fig. 3 gezeigt ist. Sein Befestigungsende 3 ist mit Hilfe der Schrauben 5 über ein Zwischenstück 6 mit der Halterung 7 verbunden, während das vordere, freie Ende ein Kopfstück 15 mit dem Fadenführer 8 und einem in Kraftrichtung (Pfeil 11) weisenden Ansatz oder Dämpfungskolben 9 trägt. In den Seitenwänden 22 des Gehäuses 16 sind "knochenförmige" Aussparungen 17 vorgesehen, die über einen großen Teil der Gehäuselänge reichen. Sie weisen parallele Begrenzungskanten auf und enden in kreisförmigen Erweiterungen, deren Durchmesser in der Darstellung der inneren Querschnittsabmessung des Gehäuses 16 entspricht. Dies führt-gewollt - dazu, daß an den Stellen der Kreismittelpunkte der Gehäusequerschnitt das geringste Widerstandsmoment (auch das geringste äquatoriale Trägheitsmoment) aufweist. Bei der dargestellten Ausführungsform sind auch in den Querwänden Aussparungen 17 vorgesehen zur Beeinflussung der Federsteifigkeit.

Der Dämpfungskolben 9 taucht in den mit magnetischer Flüssigkeit 13 gefüllten Topf 12 ein, so daß eine Dämpfung der durch die Maschine angeregten Schwingungen erfolgt. Durch die mit Hilfe des Magneten 14, der vorzugsweise ein Permanentmagnet ist, in der Vertiefung 12 (Topf 12) stabilisierte magnetische Flüssigkeit 13 wird die Zugkraftmeßvorrichtung der Erfindung lageunabhängig.

Innerhalb des Gehäuses 16 und starr eingespannt ragt ein starrer Meßstab 23 mit seinem Meßeinsatz 20 bis in den Bereich des freien Gehäuseendes (Kopfstück 15). Ihm gegenüber ist im freien Ende bzw. im Inneren des Kopfstücks 15 ein Meßkopf 19 mit Halter 24 befestigt, der zusammen mit dem freien Gehäuseende 15 bzw. dem Fadenführer 8 die durch die Fadenzugkraft verursachten Bewegungen mitmachen kann. Mit Hilfe einer praktisch trägheitslosen Abtastung dieser Bewegungen durch ein elektro-optisches System beispielsweise ist eine auch bei hohen Frequenzen der Fadenzugkraftschwankungen sichere Messung möglich.

Zwar ist eine mit der vorhergehend beschriebenen elektrooptischen Abtasteinrichtung vergleichbare Ausstattung der Fadenzugkraftmeßvorrichtung nach Fig. 1 dort nicht erwähnt, ihre Anordnung kann jedoch auch dort mit Vorteil erfolgen. Der Meßstab 23 mit seinem Meßkopf 20 ist dann zwischen den beiden Blattfedern 2 im Einspannende 3 starr befestigt, während der Meßkopf 19 mit seiner Halterung 24 im Zwischenstück 4 untergebracht ist. Andere, beispielsweise pneumatische Abtasteinrichtungen sind in beiden beschriebenen Ausführungen ebenfalls anwendbar.

Vorteilhaft sind Dämpfungskolben oder Ansatz 9 und Vertiefung oder Topf 12 aus einem unmagnetischen Material. Zur Vermeidung unterschiedlicher Wärmeausdehnungskoeffizienten sind vorteilhaft die Zwischenstücke 3, 4 der Parallelfeder 2 - 4 ebenso wie das Gehäuse 16 und der Halter 24 sowie der Meßstab 23 aus demselben Material.

Die erfindungsgemäße Dämpfungseinrichtung ist bei allen Fadenzugkraftmeßvorrichtungen mit Abgriff der Relativbewegung zwischen einem durch die Fadenzugkraft gegenüber seiner Halterung bewegten Fadenfühler und der Halterung mit Erfolg zur Unterdrückung von durch Eigenschwingungserscheinungen der Fadenfühler verursachten Meßfehlern anwendbar.

**Patentansprüche**

1. Fadenzugkraftmeßvorrichtung mit einem federnd bewegbaren Fadenfühler, dadurch gekennzeichnet, daß der Fadenfühler (1) ein federnd eingespannter Stab ist, der im Bereich seines freien Endes einen nicht ferromagnetischen Dämpfungsansatz (9) besitzt, der in einen an der Vorrichtung befestigten Topf (12) eintaucht, an dessen Grund sich ein Magnet (14) befindet und der eine magnetische Dämpfungsflüssigkeit (13) enthält.

2. Vorrichtung nach Anspruch 1, dadurch gekennzeichnet, daß der Dämpfungsansatz (9) sich in Auslenkrichtung (11) des freien Stabendes erstreckt.

3. Vorrichtung nach Anspruch 2, dadurch gekennzeichnet, daß der federnd eingespannte Stab (1) aus einer einseitig eingespannten Parallelfeder (2 - 4) besteht, die mit dem Einspannende (3) an der Halterung (7) befestigt ist.

4. Vorrichtung nach Anspruch 1 oder 2, dadurch gekennzeichnet, daß der Fadenfühler (1) eine als quaderförmiges, hohles Gehäuse (16) mit rechteckigem oder quadratischem Querschnitt (Fig. 3) ausgebildete Parallelfeder ist, deren parallel zur Kraftrichtung (11) verlaufende Seitenwände (22) symmetrisch zur Biegeebene (21) angeordnete, über einen wesentlichen Teil der Gehäuselänge reichende Ausnehmungen (17) in Knochenform aufweisen.

5. Vorrichtung nach Anspruch 4,
dadurch gekennzeichnet, daß
Ober- und Unterseite des quaderförmigen Gehäuses (16) ebenfalls mit Ausnehmungen (17) versehen sind.

6. Vorrichtung nach einem der vorhergehenden Ansprüche,
dadurch gekennzeichnet, daß
der die magnetische Flüssigkeit (13) enthaltende, an der Vorrichtung befestigte Topf (12) aus einem nichtmagnetischen Werkstoff gefertigt ist.

## Claims

1. Yarn tensile force measuring device having a resiliently movable yarn sensor, characterized in that the yarn sensor (1) is a resiliently clamped rod, which in the region of its free end has a non-ferromagnetic damping attachment (9), which dips into a pot (12) fixed to the device, at the bottom of which is located a magnet (14) and which contains a magnetic damping liquid (13).

2. Device according to Claim 1, characterized in that the damping attachment (9) extends in the direction of deflection (11) of the free rod end.

3. Device according to Claim 2, characterized in that the resiliently clamped rod (1) consists of a parallel spring (2 - 4) clamped at one end, which is fixed to the support (7) with the clamped end (3).

4. Device according to Claim 1 or 2, characterized in that the thread sensor (1) is a parallel spring, which is constructed as a cuboid-shaped, hollow housing (16) having a rectangular or square cross-section (Figure 3), and the side walls (22) of which extending parallel to the direction of force (11) have cutouts (17) in the form of a bone which are arranged symmetrically to the bending plane (21) and extend over a substantial part of the housing length.

5. Device according to Claim 4, characterized in that topside and underside of the cuboid-shaped housing (16) are likewise provided with cutouts (17).

6. Device according to one of the preceding Claims, characterized in that the pot (12) containing the magnetic liquid (13) and fixed to the device is manufactured from a non-magnetic material.

## Revendications

1. Dispositif de mesure de la force de traction d'un fil comportant un tête fil déplaçable élastiquement, caractérisé par le fait que le tâte-fil (1) est un barreau qui est encastré élastiquement et qui, dans la zone de son extrémité libre, comporte un appendice d'amortissement non ferromagnétique (9) lequel plonge dans un pot (12) qui est fixé sur le dispositif, est muni sur son fond d'un aimant (14) et qui contient un liquide d'amortissement magnétique (13).

2. Dispositif selon la revendication 1, caractérisé par le fait que l'appendice d'amortissement (9) s'étend dans le sens de la déviation (11) de l'extrémité libre du barreau.

3. Dispositif selon la revendication 2, caractérisé par le fait que le barreau (1), encastré élastiquement, est constitué par un ressort à lames parallèles (2 - 4) qui est encastré d'un seul côté et qui est assujetti au support (7) par son extrémité (3), côté fixation.

4. Dispositif selon la revendication 1 ou 2, caractérisé par le fait que le tâte-fil (1) est un ressort à deux lames parallèles, réalisé sous la forme d'un boîtier parallélépipédique creux (16) de section transversale rectangulaire ou carrée (figure 3) et dont les parois latérales (22), placées parallèlement au sens (11) de la force, comportent des évidements (17) en forme d'os disposés symétriquement par rapport au plan de flexion (21) et s'étendant sur une grande partie de la longueur du boîtier.

5. Dispositif selon la revendication 4, caractérisé par le fait que les faces supérieure et inférieure du boîtier parallélépipédique (16) sont également munies d'évidements (17).

6. Dispositif selon l'une des revendications précédentes, caractérisé par le fait que le pot (12) contenant le liquide magnétique (13) et fixé sur le dispositif, est fabriqué en un matériau non magnétique.

FIG. 1

FIG. 3

FIG. 2

1